# EUROPEAN PATENT SPECIFICATION

(11) **EP 3 681 274 B1**
(45) Date of publication and mention of the grant of the patent: **28.07.2021**
(21) Application number: 18772930.6
(22) Date of filing: 11.09.2018
(51) Int. Cl.: A01K 29/00

(54) **ANIMAL TAG FOR MONITORING ANIMAL BEHAVIOR**
TIERMARKE ZUR ÜBERWACHUNG DES TIERVERHALTENS
ÉTIQUETTE PORTÉE PAR UN ANIMAL POUR SURVEILLER LE COMPORTEMENT D'UN ANIMAL

(30) Priority: 13.09.2017 SE 1751112
(43) Date of publication of application: 22.07.2020
(73) Proprietor: DeLaval Holding AB, 147 21 Tumba (SE)
(72) Inventor: FLORCZAK, Keld, 147 21 Tumba (SE)
(74) Representative: DeLaval International AB
(86) International application number: PCT/SE2018/050909
(87) International publication number: WO 2019/054918

(56) References cited:
- EP-A1- 0 808 567
- WO-A1-2013/006056
- US-A1- 2016 165 852
- US-A1- 2016 198 960
- US-A1- 2017 095 206
- US-B2- 8 979 757

## Description

### TECHNICAL FIELD

The present invention relates generally to solutions for monitoring animal behavior. The invention relates to an animal tag according to the preamble of claim 1.

### BACKGROUND

Aiming at an animal friendly and economically efficient handling of livestock animals there are various forms of technical means to keep track of animals and/or to register their behaviors. For example, the following solutions are known.

WO 2013/005038 describes a collar for use in a system for monitoring livestock. The collar has a strap and buckle and at least two retaining components. The components contain monitoring and transmitting equipment including a three axis accelerometer, processing electronics, power source and transmitter. The collar is arranged such that, when it is placed on the animal being monitored, the weight of the buckle draws the buckle to the lower edge of the neck of the animal and the retaining components are positioned at the upper edge of either side of the top of the neck of the animal.

WO 2006/022548 shows a system for locating at least one animal in a predetermined area. Here, at least one label which is designed to be attached to or in the at least one animal, which label is provided with a transmitter for transmitting an ultra-wide band signal. At least one receiver which is placed in or adjacent the area and which is designed to receive the ultra-wide band signal of the transmitter of the at least one label, and a signal processing device which is connected to or integrated with the at least one receiver for locating the at least one label on the basis of the ultra-wide band signal received by the at least one receiver on the basis of e.g. delay time and/or reception angle.

US 2013/0054130 discloses a hybrid-computing navigation system to be worn by a user. The system includes a modified motion sensor group which includes 9-axis or 10-axis motion sensors that are built-in, and a host device configured for providing navigation information, in which the modified motion sensor group is worn on the user so that a moving direction of the user is the same as a heading direction calculated from the modified motion sensor group. The modified motion sensor group provides step counting and absolute orientation in yaw, roll and pitch using a sensor fusion technique. The navigation system further includes at least one wireless sensor at a WiFi hot spot to perform sensor fusion for obtaining an absolute position of an estimated position of the user. Sensor fusion combining with location map are used to perform location map matching and fingerprinting. A method of position estimation of a user using the navigation system is also disclosed.

WO 2013/006056 portrays a system for analyzing a condition of an animal. The system includes an identification unit which is arranged to be worn by an animal, wherein the identification unit includes a first transmitter unit, a movement sensor, and a control unit which is communicatively connected with the transmitter unit and the movement sensor. The system further includes a receiver unit and a computer which is connected with the receiver unit and wherein the system further includes positioning means for measuring a position of the identification unit, wherein the control unit is arranged for, in use, storing and/or processing electronic information of movements of the animal which have been obtained with the movement sensor. The system is further arranged to feed positions of the identification unit measured with the aid of the positioning means to the computer and/ or the control unit, wherein the computer and/or the control unit is arranged to process the electronic information about detected movements and the electronic information about the measured positions in combination for analyzing the condition of the animal.

US 8,979,757 discloses a method and system for monitoring the condition of livestock via a plurality of sensors for sensing a plurality of different behavioral parameters of an animal. The sensed data is transmitted wirelessly by a unit to a central processor, and a plurality of status conditions of the animal is determined on the basis of the transmitted, sensed data such as the onset of parturition, fertility status and other health status conditions. The unit may be permanently worn by the animal and may keep an electronic record of the status conditions of the animal.

US8979757 B2 discloses an animal tag configured to monitor animal behavior according to the preamble of claim 1.

Consequently, a variety of solutions exist for determining and recording a relatively large amount of behavior-related parameters. However, the known solutions are complex and fairly energy demanding, especially the ones for sensing comparatively detailed behavioral parameters.

### SUMMARY

The object of the present invention is therefore to offer a reliable and energy-efficient solution for monitoring animal behavior with a relatively high degree of detail in the generated data.

According to the invention, the object is achieved by the initially described animal tag, wherein the processing unit is configured to control at least one sensor in the second set of sensors to be active or inactive based on the movement represented by the first amount of data.

The proposed animal tag is advantageous because it enables selective activation of the more energy-demanding orientation sensors, so that these types of sensors are only active when actually needed to distinguish between specific behavioral statuses. As a result, one and the same tag can potentially follow an animal throughout its entire lifespan without requiring battery replacement or charging.

According to one embodiment of the invention, the second set of sensors contains first and second subsets of sensors. The processing unit is here further configured to control at least one sensor in the second subset of sensors to be active or inactive based on data produced by at least one sensor in the first subset of sensors. Consequently, additional activation criteria be applied for the sensors to attain enhanced precision, such that the sensors are used with an even higher degree of efficiency.

According to the invention, the first set of sensors contains a multi-axis accelerometer configured to determine a three-dimensional movement vector of the animal tag with respect to the fix reference frame. Thereby, relatively complex and fine movement patterns can be registered, which for example are representative of the different jaw movements associated with eating and ruminating respectively.

According to yet another embodiment of the invention, the second subset of sensors contains a multi-axis gyroscope configured to determine an orientation of the animal tag in three dimensions relative to the fix reference frame. Although the multi-axis gyroscope may be a relatively energy demanding sensor it is advantageous because it provides high-quality orientation data, and is thus capable of describing fine and/or complex movement patterns. Further, the suggested selective activation of the sensors in the second subset renders it possible to use the multi-axis gyroscope economically.

According to still another embodiment of the invention, the second subset of sensors contains a multi-axis compass configured to determine an orientation of the animal tag in three dimensions relative to the fix reference frame. This type of compass may provide orientation data of a quality comparable to that of the multi-axis gyroscope; and, of course, the multi-axis compass may be used in an energy-saving way analogous to what is described above.

According to the invention, the processing unit is configured to determine specific behavioral statuses of the animal based on the sensor signals. For example, the processing unit may be configured to:
determine the behavioral status to be ruminating if the three-dimensional movement vector fulfills at least one criterion specified by a first data pattern indicative of a first type of jaw movements;
determine the behavioral status to be eating if the three-dimensional movement vector fulfills at least one criterion specified by a second data pattern indicative of a second type of jaw movements, and the orientation fulfills at least one criterion specified by a third data pattern;
according to the invention determine the behavioral status to be transitioning from lying position to a standing position in a healthy manner if the three-dimensional movement vector fulfills at least one criterion specified by a fourth data pattern;
according to the invention determine the behavioral status to be transitioning from a standing position to a lying position in a healthy manner if the three-dimensional movement vector fulfills at least one criterion specified by a fifth data pattern;
according to the invention determine the behavioral status of the animal to be transitioning from lying position to a standing position in a healthy manner if the orientation fulfills at least one criterion specified by a sixth data pattern; and/or
according to the invention determine the behavioral status of the animal to be transitioning from a standing position to a lying position in a healthy manner if the orientation fulfills at least one criterion specified by a seventh data pattern.

Thereby, highly detailed behavioral information about the animals can be generated, which, in turn, provides the farmer with a valuable basis for handling his/her livestock in an animal friendly and economically efficient manner.

According to still another embodiment of the invention, the animal tag also contains a data storage unit configured to store information representing the behavioral status of the animal. The data storage unit further stores a time indicator reflecting when the first and/or second amount of data was registered based upon which first and/or second amount of data the information was produced. Thereby, the animal tag may for example constitute an intermediate storage for the behavioral status before this information is forwarded to a computer for further processing and/or analysis.

Additionally, or alternatively, the animal tag may include a wireless interface configured to send messages. Here, each message contains information representing the behavioral status of the animal and a time indicator reflecting when the first and/or second amount of data was registered based upon which first and/ or second amount of data the information was produced. Such an interface is advantageous because it enables convenient read-out of the behavioral status data to an external resource, e.g. a computer.

According to another aspect but not according to the invention, the object is achieved by a method implemented in an animal tag to be carried by an animal for monitoring the animal's behavior, wherein the method involves:
producing, repeatedly, via a first set of sensors in the animal tag, a first amount of data representing a movement vector of the animal tag relative to a fix reference frame;
producing, via a second set of sensors in the animal tag, a second amount of data representing micro movements of the animal tag with respect to an orientation of the animal tag relative to the fix reference frame;
determining based on the first and/or second amounts of data, a behavioral status of the animal carrying the animal tag, and
controlling at least one sensor in the second set of sensors to be active or inactive based on the movement represented by the first amount of data.

The advantages of this method, as well as the preferred embodiments thereof, are apparent from the discussion above with reference to the proposed system.

According to a further aspect but not according to the invention the object is achieved by a computer program loadable into a non-volatile data carrier communicatively connected to a processing unit, where the computer program includes software for executing the above-proposed method when the program is run on the processing unit.

According to another aspect but not according to the invention the object is achieved by a non-volatile data carrier containing the above computer program.

Further advantages, beneficial features and applications of the present invention will be apparent from the following description and the dependent claims.

### BRIEF DESCRIPTION OF THE DRAWINGS

The invention is now to be explained more closely by means of preferred embodiments, which are disclosed as examples, and with reference to the attached drawings.
- Figures 1a-b: show two different embodiments of how the proposed animal tag can be arranged on an animal;
- Figure 2: shows a block diagram over an animal tag according to one embodiment of the invention;
- Figure 3: schematically illustrates a condition for activating and deactivating the proposed animal tag; and
- Figure 4: illustrates, by means of a flow diagram, the general method.

### DETAILED DESCRIPTION

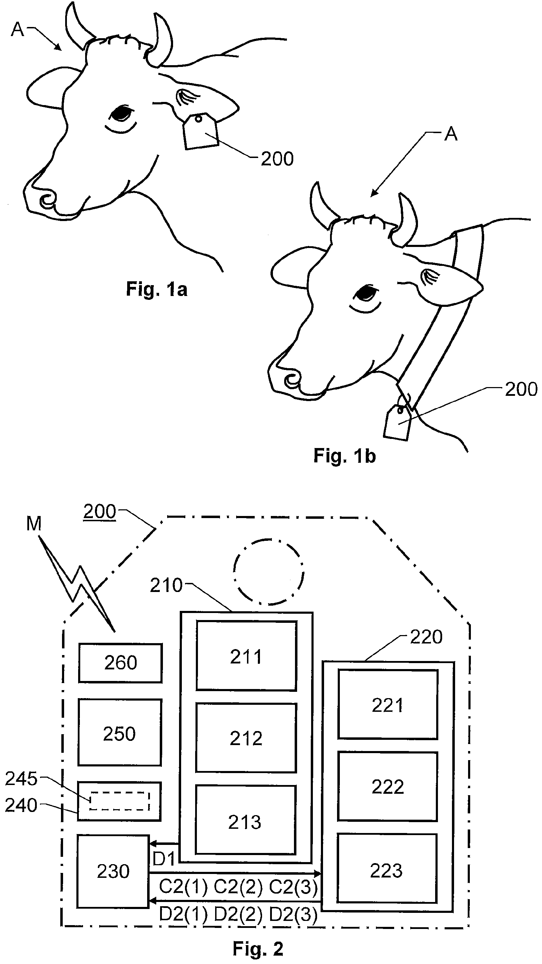

Figure 1a shows a first example of how an animal tag 200 can be arranged in the ear of an animal A, i.e. as an ear tag.

Figure 1b shows a second example of how the animal tag 200 instead is arranged in a neck strap worn by the animal A. Of course, according to the invention, many alternative arrangements of the animal tag 200 on the animal A are conceivable provided that the animal tag 200 remains at a relatively fix position in relation to the animal's A head.

Normally, the animal tag 200 shows a visual indication of an identity of the animal A, e.g. a combination of characters or a name. For convenient tracking, the animal tag 200 often also contains a transponder for automatic read-out of the animal identity. Here, however, in addition to reflecting any such data, the animal tag 200 is configured to monitor the animal's A behavior.

For example, according to the invention, a behavioral status determined via the animal tag 200 may be one or more of the following: transitioning from a standing to a lying position according to a healthy movement pattern; transitioning from a standing to a lying position according to an unhealthy movement pattern; lying down; lying down and eating; lying down and ruminating; transitioning from a lying to a standing position according to a healthy movement pattern; transitioning from a lying to a standing position according to an unhealthy movement pattern; standing up; standing up and eating; standing up and ruminating; grazing and standing still; grazing and walking; walking according to a healthy movement pattern; walking while being lame with respect to a particular limb; drinking; and being in heat.

Turning now to Figure 2, we see an overview of the animal tag 200 according to one embodiment of the invention.

In order to determine the behavioral status of the animal A to which the animal tag 200 is attached, the animal tag 200 includes a first set of sensors 210, a second set of sensors 220 and a processing unit 230.

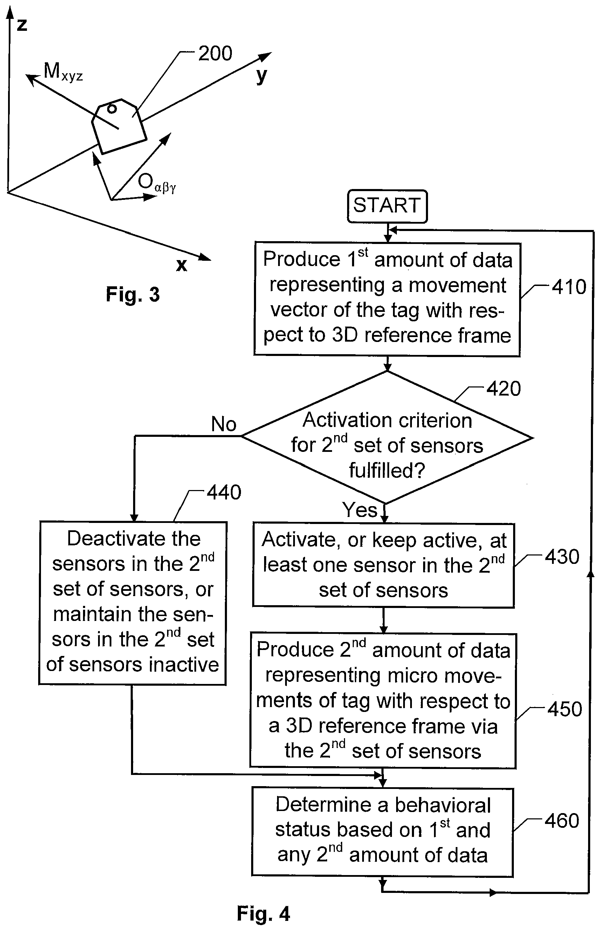

Referring further to Figure 3, we see a fix reference frame in the form of a coordinate system x, y and z where the animal tag 200 can be positioned. In other words, the coordinate system x, y and z represents a space in which the animal A may move, such as an enclosed pasture, a corral, a barn and/or a cowshed.

The first set of sensors 210 is configured to repeatedly produce a first amount of data D1 representing a movement vector M_{xyz} of the animal tag 200 with respect to the fix reference frame x, y and z. Therefore, the first set of sensors 210 comprises a multi-axis accelerometer 211, which produces a spatial description of the direction in which the animal tag 200 travels.

For example, based on the three-dimensional movement vector M_{xyz}, the processing unit 230 may determine that the animal A is ruminating. Namely, such a conclusion can be drawn if the three-dimensional movement vector M_{xyz} fulfills at least one criterion specified by a first data pattern. The first data pattern may for example be associated with regular jaw movements made by the animal A to which the animal tag 200 is attached. Provided that the at least one criterion is fulfilled by the three-dimensional movement vector M_{xyz}, the processing unit 230 can associate the animal A with a behavioral status "ruminating" as of a point in time when the three-dimensional movement vector M_{xyz} was registered.

In addition to the multi-axis accelerometer 211, the first set of sensors 210 may contain an altimeter 212 and/or a pressure sensor 213 to register an elevation and/or an air-pressure level respectively.

The second set of sensors 220 is configured to produce a second amount of data D2(1), D2(2) and/or D2(3) representing micro movements of the animal tag 200 with respect to an orientation O_{αβγ} relative to the fix reference frame x, y and z.

The processing unit 230 is configured to receive the first and second amounts of data D1 and D2(1), D2(2) and/or D2(3) respectively. Based thereon, the processing unit 230 is configured to determine a behavioral status of the animal A that carries the animal tag 200. To conserve energy (by aiming at using only as many sensors as necessary at each point in time), the processing unit 230 is configured to control at least one sensor 221, 222 and/or 223 respectively in the second set of sensors 220 to be active or inactive depending on the contents of the first amount of data D1 registered by the first set of sensors 210. Therefore, via one or more control signals C2(1), C2(2) and/or C2(3), the processing unit 230 is configured to control at least one sensor 221, 222 and/or 223 respectively in the second set of sensors 220 to be active or inactive. This means that, depending on the contents of the first amount of data D1, the processing unit 230 may determine the behavioral status of the animal A based on the first amount of data D1 alone, or in combination with data D2(1), D2(2) and/or D2(3) from one or more of the sensors in the second set of sensors 220.

According to one embodiment of the invention, the second set of sensors 220 is further divided into first and second subsets of sensors, for example represented by one sensor 221 and a pair of sensors 222 and 223 respectively. Here, the processing unit 230 is further configured to control, via control signals C2(2) and C2(3) respectively, at least one sensor 222 and/or 223 in the second subset of sensors to be active or inactive based on data D2(1) produced by at least one sensor 221 in the first subset of sensors. In other words, the sensors in the second set of sensors 220 may also control one another hierarchically depending on whether or not certain conditions are fulfilled.

The first subset of sensors may contain a multi-axis compass 221 that is configured to determine an orientation O_{αβγ} of the animal tag 200 in three dimensions relative to the fix reference frame x, y and z.

The second subset of sensors may further contain a multi-axis gyroscope 222 configured to determine an orientation O_{αβγ} of the animal tag 200 in three dimensions relative to the fix reference frame x, y and z. I.e. the multi-axis gyroscope 222 produces a spatial description of how the animal tag 200 is rotated. Alternatively, or in addition thereto, the second subset of sensors may contain a precision GNSS receiver (e.g. of GPS-type) 223 configured to determine the orientation O_{αβγ}. (GNSS = Global Navigation Satellite System; GPS = Global Positioning System).

If (a) the three-dimensional movement vector M_{xyz} fulfills at least one criterion specified by a second data pattern being indicative of jaw movements; and (b) the orientation O_{αβγ} fulfills at least one criterion specified by a third data pattern, for example indicative of the jaw movements being irregular, it can be concluded that the animal A is eating. The processing unit 230 can therefore associate the animal A with a behavioral status "eating" as of a point in time when the three-dimensional movement vector M_{xyz} was registered and also the at least one criterion specified by a third data pattern with respect to the orientation O_{αβγ} was fulfilled.

If, however, the three-dimensional movement vector M_{xyz} instead fulfills at least one criterion specified by a fourth data pattern, it can be concluded that the animal A transitions from a lying position to a standing position in a healthy manner. Thus, at a point in time when such a three-dimensional movement vector M_{xyz} was registered, the processing unit 230 can associate the animal A with a behavioral status "healthy rising."

Analogously, if the three-dimensional movement vector M_{xyz} fulfills at least one criterion specified by a fifth data pattern, it can be concluded that the animal A transitions from a standing position to a lying position in a healthy manner. Consequently, provided that, at a particular point in time, a three-dimensional movement vector M_{xyz} fulfilling the at least one criterion specified by the fifth data pattern is registered, the processing unit 230 can associate the animal A with a behavioral status "healthy lying down" at said point in time.

As an alternative to the above, at least one criterion specified by the fourth data pattern with respect to the three-dimensional movement vector M_{xyz}, at least one criterion specified by a sixth data pattern may be applied to the orientation O_{αβγ} to conclude that the animal A transitions from lying position to a standing position in a healthy manner.

In further analogy thereto, at least one criterion specified by a seventh data pattern may be applied to the orientation O_{αβγ} to conclude that the animal A transitions from standing to a lying position in an unhealthy manner.

Preferably, the above-mentioned movement patterns are defined by a machine-learning procedure, for instance implemented via a neural network. Thus, the movement patterns representing the criteria for determining the different behavioral statuses can be generated and improved gradually as the animal tag 200 is used.

In order to conserve energy and facilitate communication with an external resource, e.g. a computer arranged to process and/or analyze the registered behavioral statuses, the animal tag 200 may preferably contain a data storage unit 250 configured to temporarily store information representing the behavioral status of the animal A together with a time indicator reflecting when the first and/or second amount of data D1 and/or D2(1), D2(2) and/or D2(3) was registered based upon which first and/or second amount of data the information was produced. Namely, if the registered behavioral statuses are intermediately stored in the animal tag 200, this information can be read-out when the animal A is located at a place where this is convenient, for example at a gate to a stall. This is a very energy efficient alternative to transmitting the data irrespective of the animal's current location; since, at least occasionally, the distance between the animal A and the receiving station may be considerable.

However, regardless of whether or not the data storage unit 250 is included in the animal tag 200, it is advantageous if the animal tag 200 has a wireless interface 260 configured to send messages M to external resources, where each message M contains information representing the behavioral status of the animal A and a time indicator reflecting when the first and/or second amount of data D1 and/or D2(1), D2(2) and/or D2(3) was registered based upon which first and/or second amount of data the information was produced. Namely, this enables convenient read-out of the behavioral status data to the external resource, either via the preferred short-range data transmission (as described above), or via long-range data transmissions.

It is generally advantageous if the processing unit 230 is configured to effect the above-mentioned procedure in an automatic manner, for instance by executing a computer program 245. Therefore, the processing unit 230 may be communicatively connected to a memory unit, i.e. non-volatile data carrier 240, storing the computer program 245, which, in turn, contains software for making at least one processor in the processing unit 230 execute the above-described actions when the computer program 245 is run on the processing unit 230.

In order to sum up, and with reference to the flow diagram in Figure 4, we will now describe the general method for monitoring the animal behavior, which method is implemented in the animal tag 200.

In a first step 410, a first amount of data D1 is produced via a first set of sensors 210. The first amount of data D1 represents a movement vector M_{xyz} of the animal tag 200 with respect to a fix reference frame x, y and z.

Then, a step 420 checks if an activation criterion for a second set of sensors 220 is fulfilled. If affirmative, a step 430 follows; and otherwise, the procedure continues to a step 440. In particular, the activation criterion relates to the movement vector M_{xyz} represented by the first amount of data D1.

In step 430, at least one sensor in the second set of sensors 220 is activated, or kept active. Subsequently, a step 450 follows in which a second amount of data D2(1), D2(2) and/or D2(3) is produced via the second set of sensors 220. The second amount of data D2(1), D2(2) and/or D2(3) respectively represents micro movements of the animal tag 200 with respect to an orientation O_{αβγ} relative to the fix reference frame x, y and z. A step 460 then follows.

In step 440, the sensors in the second set of sensors 220 are deactivated, or kept inactive. Thereafter, the procedure continues to step 460.

In step 460, a behavioral status of the animal A that carries the animal tag 200 is determined based on the first amount of data D1, and if available through step 450, any second amount of data D2(1), D2(2) and/or D2(3).

Subsequently, the procedure loops back to step 410 for repeated production of the first amount of data D1.

All of the process steps, as well as any sub-sequence of steps, described with reference to Figure 4 above may be controlled by means of a programmed processor. Moreover, although the embodiments of the invention described above with reference to the drawings comprise processor and processes performed in at least one processor, the disclosure thus also extends to computer programs, particularly computer programs on or in a carrier, adapted for putting the invention into practice. The program may be in the form of source code, object code, a code intermediate source and object code such as in partially compiled form, or in any other form suitable for use in the implementation of the process. The program may either be a part of an operating system, or be a separate application. The carrier may be any entity or device capable of carrying the program. For example, the carrier may comprise a storage medium, such as a Flash memory, a ROM (Read Only Memory), for example a DVD (Digital Video/Versatile Disk), a CD (Compact Disc) or a semiconductor ROM, an EPROM (Erasable Programmable Read-Only Memory), an EEPROM (Electrically Erasable Programmable Read-Only Memory), or a magnetic recording medium, for example a floppy disc or hard disc. Further, the carrier may be a transmissible carrier such as an electrical or optical signal which may be conveyed via electrical or optical cable or by radio or by other means. When the program is embodied in a signal which may be conveyed directly by a cable or other device or means, the carrier may be constituted by such cable or device or means. Alternatively, the carrier may be an integrated circuit in which the program is embedded, the integrated circuit being adapted for performing, or for use in the performance of, the relevant processes.

Although the invention is especially advantageous for monitoring the behaviors of cows, the invention is equally well adapted for any other kind of livestock animals, such as goats, sheep, pigs, donkeys or buffaloes.

The term "comprises/comprising" when used in this specification is taken to specify the presence of stated features, integers, steps or components. However, the term does not preclude the presence or addition of one or more additional features, integers, steps or components or groups thereof.

The invention is not restricted to the described embodiments in the figures, but may be varied freely within the scope of the claims.

## Claims

1. An animal tag (200) configured to monitor animal behavior, the animal tag (200) comprising:
a first set of sensors (210) configured to repeatedly produce a first amount of data (D1) representing a movement vector (M_{xyz}) of the animal tag (200) relative to a fix reference frame (x, y, z), wherein the first set of sensors (210) comprises a multi-axis accelerometer (211) configured to determine the movement vector (M_{xyz}) in three dimensions with respect to the fix reference frame (x, y, z);
a second set of sensors (220) configured to produce a second amount of data (D2(1), D2(2), D2(3)) representing micro movements of the animal tag (200) with respect to an orientation (O_{αβγ}) of the animal tag (200) relative to the fix reference frame (x, y, z); and
a processing unit (230) configured to receive the first and second amounts of data (D1, D2(1), D2(2), D2(3)), **characterized in that** the processing unit (230) is configured to, based on the first and second amounts of data, to determine a behavioral status of an animal (A) carrying the animal tag (200), and configured to control (C2(1), C2(2), C2(3)) at least one sensor (221, 222, 223) in the second set of sensors (220) to be active or inactive based on the movement (M_{xyz}) represented by the first amount of data (D1), wherein the processing unit is further configured to determine the behavioral status of the animal (A) to be transitioning from a lying position to a standing position in a healthy manner if the movement vector (M_{xyz}) fulfills at least one criterion specified by a fourth data pattern or to determine the behavioral status of the animal (A) to be transitioning from a standing position to a lying position in a healthy manner if the movement vector (M_{xyz}) fulfills at least one criterion specified by a fifth data pattern, and wherein the processing unit is further configured to determine the behavioral status of the animal (A) to be transitioning from lying position to a standing position in a healthy manner if the orientation (O_{αβγ}) fulfills at least one criterion specified by a sixth data pattern or to determine the behavioral status of the animal (A) to be transitioning from a standing position to a lying position in a healthy manner if the orientation (O_{αβγ}) fulfills at least one criterion specified by a seventh data pattern.

2. The animal tag (200) according to claim 1, wherein the second set of sensors (220) comprises first and second subsets of sensors (221; 222, 223), wherein the processing unit (230) is further configured to control (C2(2), C2(3)) at least one sensor (222, 223) in the second subset of sensors to be active or inactive based on data (D2(1)) produced by at least one sensor (221) in the first subset of sensors.

3. The animal tag (200) according to any one of the preceding claims, wherein the second set of sensors (220) comprises a multi-axis gyroscope (222) configured to determine the orientation (O_{αβγ}) of the animal tag (200) in three dimensions relative to the fix reference frame (x, y, z).

4. The animal tag (200) according to any one of the preceding claims, wherein the second set of sensors (220) comprises a multi-axis compass (221) configured to determine the orientation (O_{αβγ}) of the animal tag (200) in three dimensions relative to the fix reference frame (x, y, z).

5. The animal tag (200) according to any one of the preceding claims, wherein the processing unit (230) is configured to determine the behavioral status of the animal (A) to be ruminating if the movement vector (M_{xyz}) fulfills at least one criterion specified by a first data pattern indicative of a first type of jaw movements.

6. The animal tag (200) according to any one of the preceding claims, wherein the processing unit (230) is configured to determine the behavioral status of the animal (A) to be eating if:
the movement vector (M_{xyz}) fulfills at least one criterion specified by a second data pattern indicative of second type of jaw movements, and
the orientation (O_{αβγ}) fulfills at least one criterion specified by a third data pattern.

7. The animal tag (200) according to any one of the preceding claims, further comprising a data storage unit (250) configured to store information representing the behavioral status of the animal (A) and a time indicator reflecting when the first and/or second amount of data (D1; D2(1), D2(2), D2(3)) was registered based upon which first and/or second amount of data (D1; D2(1), D2(2), D2(3)) the information was produced.

8. The animal tag (200) according to any one of the preceding claims, further comprising a wireless interface (260) configured to send messages (M), each message (M) containing information representing the behavioral status of the animal (A) and a time indicator reflecting when the first and/or second amount of data (D1, D2(1), D2(2), D2(3)) was registered based upon which first and/or second amount of data (D1, D2(1), D2(2), D2(3)) the information was produced.

## Patentansprüche

1. Tiermarke (200), die konfiguriert ist, um ein Verhalten von Tieren zu überwachen, wobei die Tiermarke (200) Folgendes umfasst:
einen ersten Satz von Sensoren (210), der konfiguriert ist, um wiederholt eine erste Menge von Daten (D1) zu erzeugen, die einen Bewegungsvektor (M_{xyz}) der Tiermarke (200) relativ zu einem festen Referenzrahmen (x, y, z) darstellt, wobei der erste Satz von Sensoren (210) einen mehrachsigen Beschleunigungsmesser (211) umfasst, der konfiguriert ist, um den Bewegungsvektor (M_{xyz}) in drei Abmessungen in Bezug auf den festen Referenzrahmen (x, y, z) zu bestimmen;
einen zweiten Satz von Sensoren (220), der konfiguriert ist, um eine zweite Menge von Daten (D2(1), D2(2), D2(3)) zu erzeugen, die Mikrobewegungen der Tiermarke (200) in Bezug auf eine Ausrichtung (O_{αβγ}) der Tiermarke (200) relativ zu dem festen Referenzrahmen (x, y, z) darstellt; und
eine Verarbeitungseinheit (230), die konfiguriert ist, um die erste und die zweite Menge von Daten (D1, D2(1), D2(2), D2(3)) zu empfangen, **dadurch gekennzeichnet, dass** die Verarbeitungseinheit (230) konfiguriert ist, um basierend auf der ersten und der zweiten Menge von Daten einen Verhaltensstatus eines Tieres (A) zu bestimmen, das die Tiermarke (200) trägt, und konfiguriert ist, um basierend auf der Bewegung (M_{xyz}), die durch die erste Menge von Daten (D1) dargestellt wird, wenigstens einen Sensor (221, 222, 223) in dem zweiten Satz von Sensoren (220) zu steuern (C2(1), C2(2), C2(3)), um aktiv oder inaktiv zu sein, wobei die Verarbeitungseinheit ferner konfiguriert ist, um den Verhaltensstatus des Tieres (A) als auf eine gesunde Weise von einer liegenden Position in eine stehende Position übergehend zu bestimmen, falls der Bewegungsvektor (M_{xyz}) wenigstens ein Kriterium erfüllt, das durch ein viertes Datenmuster festgelegt ist, oder um den Verhaltensstatus des Tieres (A) als auf eine gesunde Weise von einer stehenden Position in eine liegende Position übergehend zu bestimmen, falls der Bewegungsvektor (M_{xyz}) wenigstens ein Kriterium erfüllt, das durch ein fünftes Datenmuster festgelegt ist, und wobei die Verarbeitungseinheit ferner konfiguriert ist, um den Verhaltensstatus des Tieres (A) als auf eine gesunde Weise von einer liegenden Position in eine stehende Position übergehend zu bestimmen, falls die Ausrichtung (O_{αβγ}) wenigstens ein Kriterium erfüllt, das durch ein sechstes Datenmuster festgelegt ist, oder um den Verhaltensstatus des Tieres (A) als auf eine gesunde Weise von einer stehenden Position in eine liegende Position übergehend zu bestimmen, falls die Ausrichtung (O_{αβγ}) wenigstens ein Kriterium erfüllt, das durch ein siebtes Datenmuster festgelegt ist.

2. Tiermarke (200) nach Anspruch 1, wobei der zweite Satz von Sensoren (220) einen ersten und einen zweiten Teilsatz von Sensoren (221; 222, 223) umfasst, wobei die Verarbeitungseinheit (230) ferner konfiguriert ist, um basierend auf Daten (D2(1)), die durch wenigstens einen Sensor (221) in dem ersten Teilsatz von Sensoren erzeugt werden, wenigstens einen Sensor (222, 223) in dem zweiten Teilsatz von Sensoren zu steuern (C2(2), C2(3)), um aktiv oder inaktiv zu sein.

3. Tiermarke (200) nach einem der vorhergehenden Ansprüche, wobei der zweite Satz von Sensoren (220) ein mehrachsiges Gyroskop (222) umfasst, das konfiguriert ist, um die Ausrichtung (O_{αβγ}) der Tiermarke (200) in drei Abmessungen relativ zu dem festen Referenzrahmen (x, y, z) zu bestimmen.

4. Tiermarke (200) nach einem der vorhergehenden Ansprüche, wobei der zweite Satz von Sensoren (220) einen mehrachsigen Kompass (221) umfasst, der konfiguriert ist, um die Ausrichtung (O_{αβγ}) der Tiermarke (200) in drei Abmessungen relativ zu dem festen Referenzrahmen (x, y, z) zu bestimmen.

5. Tiermarke (200) nach einem der vorhergehenden Ansprüche, wobei die Verarbeitungseinheit (230) konfiguriert ist, um den Verhaltensstatus des Tieres (A) als wiederkäuend zu bestimmen, falls der Bewegungsvektor (M_{xyz}) wenigstens ein Kriterium erfüllt, das durch ein erstes Datenmuster festgelegt ist, das eine erste Art von Kieferbewegungen anzeigt.

6. Tiermarke (200) nach einem der vorhergehenden Ansprüche, wobei die Verarbeitungseinheit (230) konfiguriert ist, um den Verhaltensstatus des Tieres (A) als fressend zu bestimmen, falls:
der Bewegungsvektor (M_{xyz}) wenigstens ein Kriterium erfüllt, das durch ein zweites Datenmuster festgelegt ist, das eine zweite Art von Kieferbewegungen anzeigt, und
die Ausrichtung (O_{αβγ}) wenigstens ein Kriterium erfüllt, das durch ein drittes Datenmuster festgelegt ist.

7. Tiermarke (200) nach einem der vorhergehenden Ansprüche, die ferner eine Datenspeichereinheit (250), die konfiguriert ist, um Informationen zu speichern, die den Verhaltensstatus des Tieres (A) darstellen, und einen Zeitanzeiger umfasst, der basierend darauf, welche erste und/oder zweite Menge von Daten (D1; D2(1), D2(2), D2(3)) die Informationen erzeugt hat, widerspiegelt, wann die erste und/oder die zweite Menge von Daten (D1; D2(1), D2(2), D2(3)) registriert wurde.

8. Tiermarke (200) nach einem der vorhergehenden Ansprüche, die ferner eine drahtlose Schnittstelle (260), die konfiguriert ist, um Nachrichten (M) zu senden, wobei jede Nachricht (M) Informationen enthält, die den Verhaltensstatus des Tieres (A) darstellen, und einen Zeitanzeiger umfasst, der basierend darauf, welche erste und/oder zweite Menge von Daten (D1; D2(1), D2(2), D2(3)) die Informationen erzeugt hat, widerspiegelt, wann die erste und/oder die zweite Menge von Daten (D1; D2(1), D2(2), D2(3)) registriert wurde.

## Revendications

1. Étiquette portée par un animal (200) conçue pour surveiller le comportement d'un animal, l'étiquette portée par un animal (200) comprenant :
un premier ensemble de capteurs (210) configuré pour produire de manière répétée une première quantité de données (D1) représentant un vecteur de mouvement (M_{xyz}) de l'étiquette portée par un animal (200) par rapport à un système de référence fixe (x, y, z), dans laquelle le premier ensemble de capteurs (210) comprend un accéléromètre multi-axes (211) configuré pour déterminer le vecteur de mouvement (M_{xyz}) en trois dimensions par rapport au système de référence fixe (x, y, z) ;
un second ensemble de capteurs (220) configuré pour produire une seconde quantité de données (D2(1), D2(2), D2(3)) représentant des micro-mouvements de l'étiquette portée par un animal (200) par rapport à une orientation (O _{αβγ}) de l'étiquette portée par un animal (200) en fonction du système de référence fixe (x, y, z) ; et
une unité de traitement (230) configurée pour recevoir les première et seconde quantités de données (D1, D2(1), D2(2), D2(3)), **caractérisée en ce que** l'unité de traitement (230) est configurée pour, sur la base des première et seconde quantités de données, déterminer un état comportemental d'un animal (A) portant l'étiquette portée par un animal (200), et configurée pour commander (C2(1), C2(2), C2(3)) au moins un capteur (221, 222, 223) dans le second ensemble de capteurs (220) pour être actif ou inactif sur la base du mouvement (M_{xyz}) représenté par la première quantité de données (D1), dans laquelle l'unité de traitement est en outre configurée pour déterminer que l'état comportemental de l'animal (A) est un état passant d'une position couchée à une position debout de façon saine si le vecteur de mouvement (M_{xyz}) remplit au moins un critère spécifié par un quatrième modèle de données ou pour déterminer que l'état comportemental de l'animal (A) est un état passant d'une position debout à une position couchée de manière saine si le vecteur de mouvement (M_{xyz}) remplit au moins un critère spécifié par un cinquième modèle de données, et dans laquelle l'unité de traitement est en outre configurée pour déterminer que l'état comportemental de l'animal (A) est un état passant d'une position couchée à une position debout d'une manière saine si l'orientation (O_{αβγ}) remplit au moins un critère spécifié par un sixième modèle de données ou pour déterminer que l'état comportemental de l'animal (A) est un état passant d'une position debout à une position couchée de manière saine si l'orientation (O_{αβγ}) remplit au moins un critère spécifié par un septième modèle de données.

2. Étiquette portée par un animal (200) selon la revendication 1, dans laquelle le second ensemble de capteurs (220) comprend des premier et second sous-ensembles de capteurs (221 ; 222, 223), dans laquelle l'unité de traitement (230) est en outre configurée pour commander (C2(2), C2(3)) au moins un capteur (222, 223) dans le second sous-ensemble de capteurs pour être actif ou inactif sur la base des données (D2(1)) produites par au moins un capteur (221) dans le premier sous-ensemble de capteurs.

3. Étiquette portée par un animal (200) selon l'une quelconque des revendications précédentes, dans laquelle le second ensemble de capteurs (220) comprend un gyroscope multi-axes (222) configuré pour déterminer l'orientation (O_{αβγ}) de l'étiquette portée par un animal (200) en trois dimensions par rapport au système de référence fixe (x, y, z).

4. Étiquette portée par un animal (200) selon l'une quelconque des revendications précédentes, dans laquelle le second ensemble de capteurs (220) comprend un compas multi-axes (221) configuré pour déterminer l'orientation (O_{αβγ}) de l'étiquette portée par un animal (200) en trois dimensions par rapport au système de référence fixe (x, y, z).

5. Étiquette portée par un animal (200) selon l'une quelconque des revendications précédentes, dans laquelle l'unité de traitement (230) est configurée pour déterminer que l'état comportemental de l'animal (A) est un état de rumination si le vecteur de mouvement (M_{xyz}) remplit au moins un critère spécifié par un premier motif de données indicatif d'un premier type de mouvements de mâchoire.

6. Étiquette portée par un animal (200) selon l'une quelconque des revendications précédentes, dans laquelle l'unité de traitement (230) est configurée pour déterminer l'état comportemental de l'animal (A) à manger si :
le vecteur de mouvement (M_{xyz}) remplit au moins un critère spécifié par un deuxième modèle de données indicatif du second type de mouvements de mâchoire, et
l'orientation (O_{αβγ}) remplit au moins un critère spécifié par un troisième modèle de données.

7. Étiquette portée par un animal (200) selon l'une quelconque des revendications précédentes, comprenant en outre une unité de stockage de données (250) configurée pour stocker des informations représentant l'état comportemental de l'animal (A) et un indicateur de temps reflétant lorsque la première et/ou la seconde quantité de données (D1 ; D2(1), D2(2), D2(3)) a été enregistrée sur la base de quelle première et/ou seconde quantité de données (D1 ; D2(1), D2(2), D2(3)) l'information a été produite.

8. Étiquette portée par un animal (200) selon l'une quelconque des revendications précédentes, comprenant en outre une interface sans fil (260) configurée pour envoyer des messages (M), chaque message (M) contenant des informations représentant l'état comportemental de l'animal (A) et un indicateur de temps reflétant le moment où la première et/ou la seconde quantité de données (D1, D2(1), D2(2), D2(3)) a été enregistrée sur la base de quelle première et/ou seconde quantité de données (D1, D2(1), D2(2), D2(3)) l'information a été produite.
